# EUROPÄISCHE PATENTANMELDUNG

(11) **EP 4 707 049 A1**
(43) Veröffentlichungstag der Anmeldung: **11.03.2026**
(21) Anmeldenummer: 24198422.8
(22) Anmeldetag: 04.09.2024
(51) Int. Cl.: B60L 53/30, B60L 53/60, B60L 58/12

(54) **LADEMANAGEMENTVERFAHREN FÜR EIN ELEKTRISCH BETRIEBENES LANDWIRTSCHAFTLICHES ARBEITSFAHRZEUG**

(71) Anmelder: Deere & Company, Moline, IL 61265 (US)
(72) Erfinder: REITER, DOMINIK, 68163 Mannheim (DE); KRUTIN, RAJANI, 68163 Mannheim (DE)
(74) Vertreter: Dehnhardt, Florian Christopher

(57) **Zusammenfassung**

Bei einem Lademanagementverfahren für ein elektrisch betriebenes landwirtschaftliches Arbeitsfahrzeug (12), das ein Antriebssystem (42) mit einem aufladbaren elektrischen Energiespeicher (40) umfasst, wird von einer Kontrolleinheit (16) eine geografische Position einer applikationsbedingt einzulegenden Fahrtunterbrechung wenigstens einer Ladestation (54) entlang eines bei der Ausführung eines landwirtschaftlichen Arbeitseinsatzes zurückzulegenden Fahrtwegs zugewiesen und über eine Datenschnittstelle (26) in Form einer Ladeempfehlung ausgegeben.

## Beschreibung

Die Erfindung betrifft ein Lademanagementverfahren für ein elektrisch betriebenes landwirtschaftliches Arbeitsfahrzeug, das ein Antriebssystem mit einem aufladbaren elektrischen Energiespeicher umfasst.

Der vergleichsweise hohe Energiebedarf landwirtschaftlicher Anwendungen führt dazu, dass der elektrische Energiespeicher elektrisch betriebener landwirtschaftlicher Arbeitsfahrzeuge während eines Arbeitstags meist mehrfach nachgeladen werden muss. Jede der Ladepausen führt zu einer unerwünschten Unterbrechung des Arbeitsablaufs mit entsprechenden Lohneinbußen. Hinzu kommen erhöhte Anforderungen an den Fahrer bei der Einplanung geeigneter Ladegelegenheiten, insbesondere dann, wenn eine rechtzeitige Rückkehr zum Hof, genauer gesagt zu einer dort fest installierten Ladestation nicht möglich ist. Dies gilt vor allem dann, wenn es sich bei dem landwirtschaftlichen Arbeitsfahrzeug um einen landwirtschaftlichen Traktor handelt, denn hier unterliegt der tatsächliche Energieverbrauch einer Vielzahl von für den Fahrer schwer einschätzbaren und damit unvorhersehbaren (äußeren) Einflüssen, die dem Umstand geschuldet sind, dass dieser der universellen Durchführung unterschiedlichster Arbeitsaufgaben einschließlich dem Betrieb zugehöriger (elektrischer) Anbau- oder Zusatzgeräte dient. In solchen Fällen neigt der Fahrer dazu, den elektrischen Energiespeicher sicherheitshalber zu häufig nachzuladen, ohne dass eine tatsächliche Notwendigkeit besteht.

Angesichts dessen ist es Aufgabe der vorliegenden Erfindung, ein zu einem effizienten Arbeitsablauf eines elektrisch betriebenen landwirtschaftlichen Arbeitsfahrzeugs führendes Lademanagementverfahren anzugeben.

Diese Aufgabe wird durch ein Lademanagementverfahren für ein elektrisch betriebenes landwirtschaftliches Arbeitsfahrzeug mit den Merkmalen des Patentanspruchs 1 gelöst.

Bei dem erfindungsgemäßen Lademanagementverfahren für ein elektrisch betriebenes landwirtschaftliches Arbeitsfahrzeug, das ein Antriebssystem mit einem aufladbaren elektrischen Energiespeicher umfasst, ist vorgesehen, dass von einer Kontrolleinheit ein zur Ausführung eines landwirtschaftlichen Arbeitseinsatzes von dem aufladbaren elektrischen Energiespeicher aufzubringender Gesamtenergiebedarf ausgehend von Parametern, die für einen zur Ausführung des landwirtschaftlichen Arbeitseinsatzes zu erwartenden Energieverbrauch spezifisch sind, abgeschätzt wird, wobei der abgeschätzte Gesamtenergiebedarf von der Kontrolleinheit mit einem aktuellen Ladezustand des elektrischen Energiespeichers verglichen wird, wobei für den Fall, dass sich aufgrund des Vergleichs ergibt, dass der aktuelle Ladezustand des elektrischen Energiespeichers nicht ausreicht, den landwirtschaftlichen Arbeitseinsatz ohne Nachladen des elektrischen Energiespeichers abzuschließen, von der Kontrolleinheit
(i) Ladeinfrastrukturinformationen hinsichtlich der geografischen Position einer Vielzahl von Ladestationen entlang eines während des landwirtschaftlichen Arbeitseinsatzes zurückzulegenden Fahrtwegs aus einem Datenspeicher abgerufen werden,
(ii) die Notwendigkeit bzw. Absicht einer applikationsbedingt einzulegenden Fahrtunterbrechung des landwirtschaftlichen Arbeitsfahrzeugs entlang des zurückzulegenden Fahrtwegs ermittelt wird, und
(iii) die geografische Position der applikationsbedingt einzulegenden Fahrtunterbrechung wenigstens einer der Vielzahl von Ladestationen entlang des zurückzulegenden Fahrtwegs zugewiesen und über eine Datenschnittstelle in Form einer Ladeempfehlung ausgegeben wird.

Derartige applikationsbedingte Fahrtunterbrechungen ergeben sich typischerweise beim Befüllen eines an einem landwirtschaftlichen Traktor angebrachten Anbau- oder Zusatzgeräts, das der Ausbringung eines darin befindlichen streufähigen oder flüssigen Verbrauchsguts dient, beispielsweise eines Düngergranulats, von Saatgut, Spritzmittel oder Gülle. Der Befüllvorgang kann hierbei mittels eines mobilen Versorgungsfahrzeugs erfolgen.

Durch räumliche Verlegung der applikationsbedingten Fahrtunterbrechung an den Ort einer vorhandenen Ladestation lassen sich (darüberhinausgehende) unerwünschte Pausen im Arbeitsablauf auf ein erforderliches Mindestmaß reduzieren.

Die von der Ladeinfrastruktur umfassten Ladestationen sind Bestandteil eines öffentlichen und/oder betriebseigenen Ladenetzes. Diese können fest installiert oder auch transportabel bzw. mobil ausgebildet sein.

Der im landwirtschaftlichen Arbeitsfahrzeug untergebrachte elektrische Energiespeicher, bei dem es sich in der Regel um einen Akkumulator handelt, dient im Allgemeinen der Energieversorgung eines elektrischen Fahrantriebs, gegebenenfalls auch diverser elektrischer Zusatz- und/oder Arbeitsaggregate. Letztere können Bestandteil des landwirtschaftlichen Arbeitsfahrzeugs, aber auch eines daran angebrachten Anbau- oder Zusatzgeräts sein.

Vorteilhafte Weiterbildungen des erfindungsgemäßen Lademanagementverfahrens gehen aus den Unteransprüchen hervor.

Die Ladeempfehlung kann über eine mit der Datenschnittstelle in Verbindung stehende Displayeinheit in Form einer entsprechenden Fahranweisung, beispielsweise durch Anzeige einer zum Ort der ausgewählten Ladestation zurückzulegenden Fahrtroute, ausgegeben werden. Daneben ist eine drahtlose Übermittlung an einen externen Server vorstellbar, der die über die Datenschnittstelle ausgegebene Ladeempfehlung zur Koordination eines zur Durchführung des Befüllvorgangs an den Ort der ausgewählten Ladestation auszusendenden mobilen Versorgungsfahrzeugs heranzieht.

Um bei einer Vielzahl von in Frage kommenden Ladestationen eine optimale Wahl treffen zu können, besteht die Möglichkeit, dass die Zuweisung der geografischen Position der applikationsbedingt einzulegenden Fahrtunterbrechung von der Kontrolleinheit abhängig von Auswahlkriterien hinsichtlich der Erreichbarkeit, maximalen Ladeleistung, des Ladestrompreises und/oder des aktuellen Betriebszustands der Vielzahl von Ladestationen vorgenommen wird. So wird einer Ladestation, die ohne größere Umwege erreichbar ist, eine möglichst hohe Ladeleistung (gemessen am jeweiligen Ladestrompreis) aufweist, nicht durch einen anderen Verkehrsteilnehmer belegt ist, in der Regel der Vorzug gegeben. Auch defekte Ladestationen können auf Grundlage ihres aktuellen Betriebszustands von vornherein ausgeschlossen werden. Ein weiteres Auswahlkriterium kann der Umstand sein, ob die betreffende Ladestation Teil eines öffentlichen Ladenetzwerks ist oder ob es sich bevorzugterweise um eine betriebseigene Ladestation handelt.

Zumindest einige der vorgenannten Faktoren haben Einfluss auf die Ladezeit. Es ist daher von Vorteil, wenn die Wahl der Ladestation ausgehend von einem oder mehreren der Auswahlkriterien dahingehend optimiert wird, dass die Zuweisung der geografischen Position der applikationsbedingt einzulegenden Fahrtunterbrechung von der Kontrolleinheit im Sinne einer zeitoptimierten Durchführung des Ladevorgangs vorgenommen wird.

Des Weiteren ist es denkbar, dass die für den zu erwartenden Energieverbrauch spezifischen Parameter der Kontrolleinheit von einer Eingabeeinrichtung, die der bedienerseitigen Planung des auszuführenden landwirtschaftlichen Arbeitseinsatzes dient, zur Verfügung gestellt werden. Bei der Eingabeeinrichtung kann es sich um ein vernetztes Farmmanagementsystem handeln, wobei die eigentliche Planung über ein mobiles Endgerät (Tablett, Smartphone) bzw. eine darauf installierte Arbeitsplanungs-App erfolgt. Eine derartige Arbeitsplanungs-App stellt beispielsweise das "John Deere Operations Center" dar.

Handelt es sich bei dem landwirtschaftlichen Arbeitsfahrzeug um einen landwirtschaftlichen Traktor, so unterliegt der tatsächliche Energieverbrauch einer Vielzahl von Einflüssen, die dem Umstand geschuldet sind, dass dieser der universellen Durchführung unterschiedlichster Arbeitsaufgaben einschließlich dem Betrieb zugehöriger Anbau- oder Zusatzgeräte dient. In einem solchen Fall betreffen die für den zu erwartenden Energieverbrauch spezifischen Parameter beispielsweise:
(i) Angaben in Bezug auf den Wirkungsgrad eines von dem landwirtschaftlichen Traktor umfassten elektrischen Fahrantriebs einschließlich gegebenenfalls vorhandener elektrischer Zusatz- und/oder Arbeitsaggregate bei verschiedenen Arbeitspunkten,
(ii) Daten einer lebensdauerbedingten Degradation der Ladekapazität des elektrischen Energiespeichers,
(iii) Art und Umfang von im Rahmen des geplanten landwirtschaftlichen Arbeitseinsatzes auszuführenden Feldbearbeitungsmaßnahmen,
(iv) Angaben zu Art und Verschleißzustand eines hierfür verwendeten Anbau- oder Zusatzgeräts, insbesondere von bodeneingreifenden Arbeitswerkzeugen, zu angetriebenen Zusatz- und/oder Arbeitsaggregaten (die über eine elektrisch betriebene Zapfwelle des landwirtschaftlichen Traktors oder aber mittels eigener elektrischer Antriebsaggregate betrieben werden), zu gegebenenfalls vorhandenen Stütz- bzw. Führungsrädern, zu Bodenbearbeitungstiefe, Zielarbeitsgeschwindigkeit und Zielbetriebspunkten der angetriebenen Zusatz- und/oder Arbeitsaggregate, wie beispielsweise vorgegebener Zielarbeitsdrehzahlen,
(v) gespeicherte Daten hinsichtlich des Energiebedarfs vorausgegangener vergleichbarer Arbeitseinsätze, und/oder
(vi) auf die zu bearbeitende Agrarfläche bezogene Angaben hinsichtlich Topografie, Bodenart, Ertragsmesszahlen, Bestandsgröße und -dichte, Pflanzenmasse, Fahrspurverlauf, wetterabhängigen Bodeneigenschaften, wie Bodenfeuchte und -zustand, sowie der ortsabhängigen Verdichtung aufgrund von vorausgegangenen Arbeitseinsätzen.

Die Verknüpfung dieser Parameter mit einem insofern zu erwartenden elektrischen Energieverbrauch kann dabei durch Einlernen eines entsprechenden KI-Modells (KI - Künstliche Intelligenz) erfolgen. Das KI-Modell kann Bestandteil der Arbeitsplanungs-App sein.

Es sei angemerkt, dass die vorstehende Auflistung lediglich beispielhaft zu verstehen ist, vielmehr kann es sich auch um eine den jeweiligen Anforderungen angepasste Unterauswahl und/oder Kombination auch weiterer, hier nicht aufgeführter Parameter handeln.

Bevorzugt erfolgt die Wahl der wenigstens einen Ladestation von der Kontrolleinheit mit dem Ziel, dass der sich aus der Zeitspanne der applikationsbedingten Fahrtunterbrechung ergebende Ladezustand des elektrischen Energiespeichers ausreicht, um insbesondere für den Fall einer nochmaligen applikationsbedingten Fahrtunterbrechung den Ort einer weiteren Ladestation zu erreichen, oder aber, um den landwirtschaftlichen Arbeitseinsatz vollständig abzuschließen. Auf diese Weisen lassen sich aufgrund eines kritischen Ladezustands verursachte Arbeitsunterbrechungen zumindest weitgehend ausschließen.

Das erfindungsgemäße Lademanagementverfahren wird im Folgenden anhand der beigefügten Zeichnungen näher erläutert. Es zeigen:
- Fig. 1 & 2: ein als Flussdiagramm veranschaulichtes Ausführungsbeispiel des erfindungsgemäßen Lademanagementverfahrens für ein elektrisch betriebenes landwirtschaftliches Arbeitsfahrzeug, und
- Fig. 3: ein schematisch dargestelltes Ausführungsbeispiel eines in dem elektrisch betriebenen landwirtschaftlichen Arbeitsfahrzeug vorgesehenen Fahrerassistenzsystems, in dem die verfahrensgemäße Funktion verwirklicht ist.

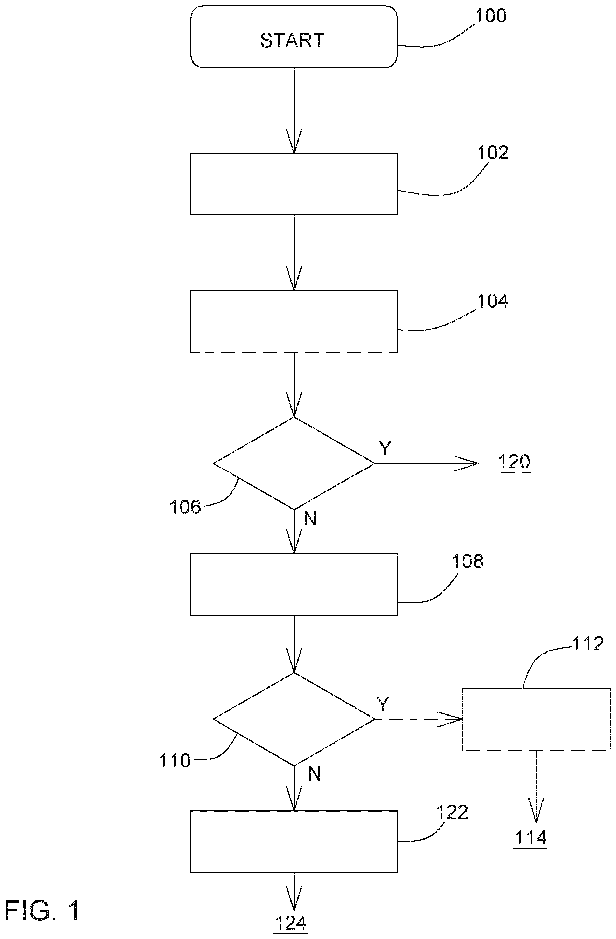

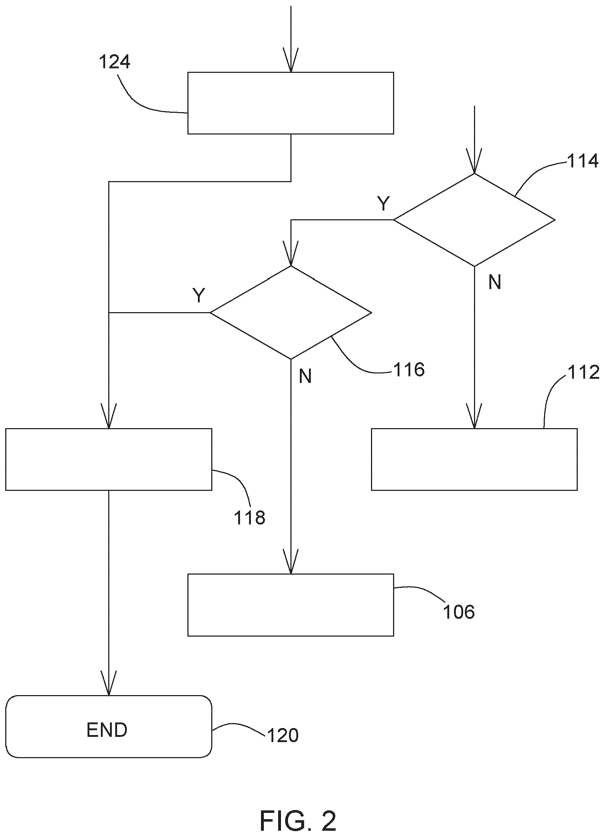

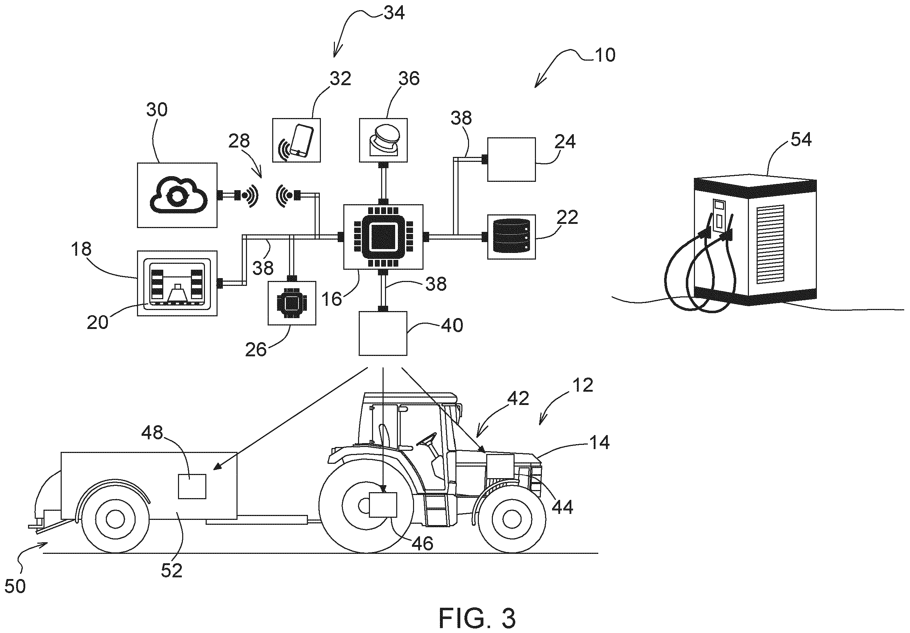

Fig. 1 und 2 zeigen ein als Flussdiagramm dargestelltes Ausführungsbeispiel des erfindungsgemäßen Lademanagementverfahrens für ein elektrisch betriebenes landwirtschaftliches Arbeitsfahrzeug, dessen Funktion in dem in Fig. 3 wiedergegebenen Fahrerassistenzsystem verwirklicht ist.

Zum besseren Verständnis soll zunächst auf den Aufbau des Fahrerassistenzsystems 10 eingegangen werden. Bei dem landwirtschaftlichen Arbeitsfahrzeug 12 handelt es sich vorliegend um einen landwirtschaftlichen Traktor 14, wobei das darin befindliche Fahrerassistenzsystem 10 neben einer mikroprozessorgesteuerten Kontrolleinheit 16 eine Nutzerschnittstelle 18 mit einer Displayeinheit 20, einen Arbeitsspeicher 22, einen Datenspeicher 24, eine Datenschnittstelle 26, eine Funkschnittstelle 28 zur Herstellung einer drahtlosen Kommunikationsverbindung mit einem externen Server 30 bzw. einer als mobiles Endgerät 32 ausgebildeten Eingabeeinrichtung 34, die der bedienerseitigen Planung eines auszuführenden landwirtschaftlichen Arbeitseinsatzes dient, ein GPS-Navigationssystem 36, sowie einen die vorgenannten Komponenten miteinander verbindenden CAN-Datenbus 38 aufweist. Bei der Eingabeeinrichtung 34 handelt es sich um ein vernetztes Farmmanagementsystem, wobei die eigentliche Planung über das mobile Endgerät 32 (Tablett, Smartphone) bzw. eine darauf installierte Arbeitsplanungs-App erfolgt. Eine derartige Arbeitsplanungs-App stellt beispielsweise das "John Deere Operations Center" dar.

Ferner dient ein in dem landwirtschaftlichen Traktor 14 angeordneter elektrischer Energiespeicher 40 der Energieversorgung eines Antriebssystems 42 mit einem elektrischen Fahrantrieb 44 sowie diverser elektrischer Zusatz- und/oder Arbeitsaggregate 46, 48. Letztere sind Bestandteil des landwirtschaftlichen Traktors 14 und/oder eines daran angebrachten Anbau- oder Zusatzgeräts 50. Das Anbau- oder Zusatzgerät 50 ist in Fig. 3 beispielhaft als gezogener Düngerstreuer 52 zur Ausbringung eines streufähigen Düngergranulats veranschaulicht. Die dem Düngerstreuer 52 zugeordneten angetriebenen Zusatz- und/oder Arbeitsaggregate 48 dienen unter anderem dem Betrieb einer oder mehrerer Wurfscheiben bzw. einem Hilfsradantrieb (nicht gezeigt).

Der elektrische Energiespeicher 40 ist als Akkumulator gängiger Bauart ausgebildet und lässt sich an einer in Fig. 3 repräsentativ dargestellten Ladestation 54 aufladen. Hierbei ist die von einer nicht näher dargestellten Ladeinfrastruktur umfasste Ladestation 54 lediglich eine einer Vielzahl von Ladestationen. Die Ladestationen sind Bestandteil eines öffentlichen und/oder betriebseigenen Ladenetzes und können fest installiert oder auch transportabel bzw. mobil ausgebildet sein. Im Falle einer transportablen bzw. mobilen Ausbildung können diese in einen Transportcontainer oder dergleichen integriert sein.

Das im Arbeitsspeicher 22 als entsprechender Programmcode hinterlegte Lademanagementverfahren wird in einem Startschritt 100 gestartet, woraufhin in einem ersten Hauptschritt 102 über die Arbeitsplanungs-App bereitgestellte Planungsdaten eines auszuführenden landwirtschaftlichen Arbeitseinsatzes (vorliegend das Ausbringen von Düngergranulat auf einer oder mehreren Agrarflächen) in den Datenspeicher 24 hochgeladen werden. Die Planungsdaten bilden in einem zweiten Hauptschritt 104 die Grundlage für eine nachfolgende Abschätzung bzw. Beurteilung des insofern vom elektrischen Energiespeicher 40 aufzubringenden Gesamtenergiebedarfs. Genauer gesagt wird der vom elektrischen Energiespeicher 40 aufzubringende Gesamtenergiebedarf im zweiten Hauptschritt 104 ausgehend von Parametern, die für einen zur Ausführung des landwirtschaftlichen Arbeitseinsatzes zu erwartenden Energieverbrauch spezifisch sind, abgeschätzt. Die für den zu erwartenden Energieverbrauch spezifischen Parameter werden der Kontrolleinheit 16 über die Eingabeeinrichtung 34 bzw. die darauf installierte Arbeitsplanungs-App zur Verfügung gestellt und in den Datenspeicher 24 hochgeladen.

Handelt es sich bei dem landwirtschaftlichen Arbeitsfahrzeug 12 wie hier um einen landwirtschaftlichen Traktor 14, so unterliegt der tatsächliche Energieverbrauch einer Vielzahl von Einflüssen, die dem Umstand geschuldet sind, dass dieser der universellen Durchführung unterschiedlichster Arbeitsaufgaben einschließlich dem Betrieb zugehöriger Anbau- oder Zusatzgeräte dient. In einem solchen Fall betreffen die für den zu erwartenden Energieverbrauch spezifischen Parameter beispielsweise:
(i) Angaben in Bezug auf den Wirkungsgrad des von dem landwirtschaftlichen Traktor 14 umfassten elektrischen Fahrantriebs 42 einschließlich der gegebenenfalls vorhandenen elektrischen Zusatz- und/oder Arbeitsaggregate 46 bei verschiedenen Arbeitspunkten,
(ii) Daten einer lebensdauerbedingten Degradation der Ladekapazität des elektrischen Energiespeichers 40,
(iii) Art und Umfang von im Rahmen des geplanten landwirtschaftlichen Arbeitseinsatzes auszuführenden Feldbearbeitungsmaßnahmen,
(iv) Angaben zu Art und Verschleißzustand eines hierfür verwendeten Anbau- oder Zusatzgeräts 50, insbesondere von bodeneingreifenden Arbeitswerkzeugen, zu angetriebenen Zusatz- und/oder Arbeitsaggregaten 48 (die über eine elektrisch betriebene Zapfwelle des landwirtschaftlichen Traktors 14 oder aber mittels eigener elektrischer Antriebsaggregate betrieben werden), zu gegebenenfalls vorhandenen Stütz- bzw. Führungsrädern, zu Bodenbearbeitungstiefe, Zielarbeitsgeschwindigkeit und Zielbetriebspunkten der angetriebenen Zusatz- und/oder Arbeitsaggregate 48, wie beispielsweise vorgegebener Zielarbeitsdrehzahlen,
(v) gespeicherte Daten hinsichtlich des Energiebedarfs vorausgegangener vergleichbarer Arbeitseinsätze, und/oder
(vi) auf die zu bearbeitende Agrarfläche bezogene Angaben hinsichtlich Topografie, Bodenart, Ertragsmesszahlen, Bestandsgröße und -dichte, Pflanzenmasse, Fahrspurverlauf, wetterabhängigen Bodeneigenschaften, wie Bodenfeuchte und -zustand, sowie der ortsabhängigen Verdichtung aufgrund von vorausgegangenen Arbeitseinsätzen.

Die Verknüpfung dieser Parameter mit einem insofern zu erwartenden elektrischen Energieverbrauch erfolgt durch Einlernen eines entsprechenden KI-Modells (KI - Künstliche Intelligenz). Das KI-Modell ist Bestandteil der Arbeitsplanungs-App.

Es sei angemerkt, dass die vorstehende Auflistung allgemeiner Natur ist und sich nicht auf ein bestimmtes Anbau- oder Zusatzgerät 50 (beispielweise den Düngerstreuer 52) bezieht. Dementsprechend kann es sich auch um eine den jeweiligen Anforderungen angepasste Unterauswahl und/oder Kombination auch weiterer, hier nicht aufgeführter Parameter handeln.

In einem dritten Hauptschritt 106 wird der im zweiten Hauptschritt 104 abgeschätzte Gesamtenergiebedarf von der Kontrolleinheit 16 mit einem aktuellen Ladezustand des elektrischen Energiespeichers 40 verglichen, wobei für den Fall, dass sich aufgrund des Vergleichs ergibt, dass der aktuelle Ladezustand des elektrischen Energiespeichers 40 nicht ausreicht, den landwirtschaftlichen Arbeitseinsatz ohne Nachladen des elektrischen Energiespeichers 40 abzuschließen, von der Kontrolleinheit 16 zunächst in einem vierten Hauptschritt 108 Ladeinfrastrukturinformationen hinsichtlich der geografischen Position einer Vielzahl von Ladestationen entlang eines während des landwirtschaftlichen Arbeitseinsatzes zurückzulegenden Fahrtwegs aus dem Datenspeicher 24 abgerufen werden, um anschließend in einem fünften Hauptschritt 110 zu ermitteln, ob die Notwendigkeit bzw. Absicht einer applikationsbedingt einzulegenden Fahrtunterbrechung des landwirtschaftlichen Traktors 14 entlang des zurückzulegenden Fahrtwegs besteht. Trifft dies zu, so wird mit einem sechsten Hauptschritt 112 fortgefahren.

Derartige applikationsbedingte Fahrtunterbrechungen ergeben sich beim Befüllen eines an dem landwirtschaftlichen Traktor 14 angebrachten Anbau- oder Zusatzgeräts 50, das der Ausbringung eines darin befindlichen streufähigen oder flüssigen Verbrauchsguts dient, wie hier eines Düngergranulats mittels des Düngerstreuers 52, aber auch von Saatgut, Spritzmittel oder Gülle.

Ergibt sich aufgrund des im dritten Hauptschritt 106 vorgenommenen Vergleichs hingegen, dass der aktuelle Ladezustand des elektrischen Energiespeichers 40 ausreicht, den landwirtschaftlichen Arbeitseinsatz ohne Nachladen des elektrischen Energiespeichers 40 abzuschließen, so wird das Verfahren in einem Schlussschritt 120 beendet.

Um bei einer Vielzahl von in Frage kommenden Ladestationen eine optimale Wahl treffen zu können, wird im sechsten Hauptschritt 112 die Zuweisung der geografischen Position der applikationsbedingt einzulegenden Fahrtunterbrechung von der Kontrolleinheit 16 abhängig von Auswahlkriterien hinsichtlich der Erreichbarkeit, maximalen Ladeleistung, des Ladestrompreises und/oder des aktuellen Betriebszustands der Vielzahl von Ladestationen vorgenommen. So wird einer Ladestation, die ohne größere Umwege erreichbar ist, eine möglichst hohe Ladeleistung (gemessen am jeweiligen Ladestrompreis) aufweist, nicht durch einen anderen Verkehrsteilnehmer belegt ist, in der Regel der Vorzug gegeben. Auch defekte Ladestationen werden auf Grundlage ihres aktuellen Betriebszustands von vornherein ausgeschlossen. Ein weiteres Auswahlkriterium ist der Umstand, ob die betreffende Ladestation Teil eines öffentlichen Ladenetzwerks ist oder ob es sich bevorzugterweise um eine betriebseigene Ladestation handelt.

Zumindest einige der vorgenannten Faktoren haben Einfluss auf die Ladezeit. Die Wahl der Ladestation wird daher ausgehend von einem oder mehreren der Auswahlkriterien dahingehend optimiert, dass die Zuweisung der geografischen Position der applikationsbedingt einzulegenden Fahrtunterbrechung von der Kontrolleinheit 16 im Sinne einer zeitoptimierten Durchführung des Ladevorgangs vorgenommen wird.

In einem siebten Hauptschritt 114 bzw. einem achten Hauptschritt 116 wird ferner überprüft, ob der sich aus der Zeitspanne der applikationsbedingten Fahrtunterbrechung ergebende Ladezustand des elektrischen Energiespeichers 40 ausreicht, um für den Fall einer nochmaligen applikationsbedingten Fahrtunterbrechung den Ort einer weiteren Ladestation zu erreichen bzw. um den landwirtschaftlichen Arbeitseinsatz vollständig abzuschließen. Trifft dies nicht zu, so kehrt das Verfahren ausgehend vom siebten Hauptschritt 114 zum sechsten Hauptschritt 112 bzw. vom achten Hauptschritt 116 zum dritten Hauptschritt 106 zurück, mit dem Ziel der Wahl einer geeigneten Ladestation. Andernfalls wird die geografische Position der applikationsbedingt einzulegenden Fahrtunterbrechung der ausgewählten Ladestation 54 zugewiesen und in einem neunten Hauptschritt 118 über die Datenschnittstelle 26 in Form einer entsprechenden Ladeempfehlung ausgegeben. Danach wird das Verfahren im Schlussschritt 120 beendet.

Die Ausgabe der Ladeempfehlung erfolgt im neunten Hauptschritt 118 über die mit der Datenschnittstelle 26 in Verbindung stehende Displayeinheit 20 in Form einer entsprechenden Fahranweisung, beispielsweise durch Anzeige einer zum Ort der ausgewählten Ladestation 54 zurückzulegenden Fahrtroute. Die Vorgabe der Fahrtroute erfolgt hierbei unter Zuhilfenahme des GPS-Navigationssystems 36. Daneben ist eine drahtlose Übermittlung mittels der Funkschnittstelle 28 an den externen Server 30 vorgesehen, der die über die Datenschnittstelle 26 ausgegebene Ladeempfehlung zur Koordination eines zur Durchführung des Befüllvorgangs an den Ort der ausgewählten Ladestation 54 auszusendenden mobilen Versorgungsfahrzeugs heranzieht.

Durch räumliche Verlegung der applikationsbedingten Fahrtunterbrechung an den Ort der vorhandenen Ladestation 54 lassen sich (darüberhinausgehende) unerwünschte Pausen im Arbeitsablauf auf ein erforderliches Mindestmaß reduzieren.

Ein abweichender Verfahrensablauf ist für den Fall vorgesehen, dass im fünften Hauptschritt 110 von der Kontrolleinheit 16 erkannt wird, dass im (weiteren) Fahrt- bzw. Arbeitsverlauf eine applikationsbedingte Fahrtunterbrechung nicht zu erwarten ist. In diesem Fall wird mit einem zehnten Hauptschritt 122 fortgefahren, in dem analog zur Vorgehensweise im zweiten Hauptschritt 104 abgeschätzt wird, welcher Energiebedarf für die vollständige Ausführung des geplanten landwirtschaftlichen Arbeitseinsatzes nach Verbrauch des vorhandenen Ladeinhalts des elektrischen Energiespeichers 40 verbleibt. Abhängig vom Restenergiebedarf wird in einem elften Hauptschritt 124 von der Kontrolleinheit 16 (ausgehend von den im vierten Hauptschritt 108 identifizierten Lademöglichkeiten) im neunten Hauptschritt 118 eine kartografische Übersicht in Frage kommender Ladestationen erstellt und über die Displayeinheit 20 ausgegeben. Danach wird das Verfahren auch hier im Schlussschritt 120 beendet.

## Patentansprüche

1. Lademanagementverfahren für ein elektrisch betriebenes landwirtschaftliches Arbeitsfahrzeug, das ein Antriebssystem (42) mit einem aufladbaren elektrischen Energiespeicher (40) umfasst, bei dem von einer Kontrolleinheit (16) ein zur Ausführung eines landwirtschaftlichen Arbeitseinsatzes von dem aufladbaren elektrischen Energiespeicher (40) aufzubringender Gesamtenergiebedarf ausgehend von Parametern, die für einen zur Ausführung des landwirtschaftlichen Arbeitseinsatzes zu erwartenden Energieverbrauch spezifisch sind, abgeschätzt wird, wobei der abgeschätzte Gesamtenergiebedarf von der Kontrolleinheit (16) mit einem aktuellen Ladezustand des elektrischen Energiespeichers (40) verglichen wird, wobei für den Fall, dass sich aufgrund des Vergleichs ergibt, dass der aktuelle Ladezustand des elektrischen Energiespeichers (40) nicht ausreicht, den landwirtschaftlichen Arbeitseinsatz ohne Nachladen des elektrischen Energiespeichers (40) abzuschließen, von der Kontrolleinheit (16)
(i) Ladeinfrastrukturinformationen hinsichtlich der geografischen Position einer Vielzahl von Ladestationen entlang eines während des landwirtschaftlichen Arbeitseinsatzes zurückzulegenden Fahrtwegs aus einem Datenspeicher (24) abgerufen werden,
(ii) die Notwendigkeit bzw. Absicht einer applikationsbedingt einzulegenden Fahrtunterbrechung des landwirtschaftlichen Arbeitsfahrzeugs (12) entlang des zurückzulegenden Fahrtwegs ermittelt wird, und
(iii) die geografische Position der applikationsbedingt einzulegenden Fahrtunterbrechung wenigstens einer der Vielzahl von Ladestationen entlang des zurückzulegenden Fahrtwegs zugewiesen und über eine Datenschnittstelle (26) in Form einer Ladeempfehlung ausgegeben wird.

2. Lademanagementverfahren nach Anspruch 1, **dadurch gekennzeichnet, dass** die Ladeempfehlung über eine mit der Datenschnittstelle (26) in Verbindung stehende Displayeinheit (20) in Form einer entsprechenden Fahranweisung, beispielsweise durch Anzeige einer zum Ort der ausgewählten Ladestation (54) zurückzulegenden Fahrtroute, ausgegeben wird.

3. Lademanagementverfahren nach Anspruch 1 oder 2, **dadurch gekennzeichnet, dass** mittels einer Funkschnittstelle (28) eine drahtlose Übermittlung der Ladeempfehlung an einen externen Server (30) erfolgt, wobei der externe Server (30) die über die Datenschnittstelle (26) ausgegebene Ladeempfehlung zur Koordination eines zur Durchführung des Befüllvorgangs an den Ort der ausgewählten Ladestation (54) auszusendenden mobilen Versorgungsfahrzeugs heranzieht.

4. Lademanagementverfahren nach wenigstens einem der vorhergehenden Ansprüche, **dadurch gekennzeichnet, dass** die Zuweisung der geografischen Position der applikationsbedingt einzulegenden Fahrtunterbrechung von der Kontrolleinheit (16) abhängig von Auswahlkriterien hinsichtlich der Erreichbarkeit, maximalen Ladeleistung, des Ladestrompreises und/oder des aktuellen Betriebszustands der Vielzahl von Ladestationen vorgenommen wird.

5. Lademanagementverfahren nach wenigstens einem der vorhergehenden Ansprüche, **dadurch gekennzeichnet, dass** die Zuweisung der geografischen Position der applikationsbedingt einzulegenden Fahrtunterbrechung von der Kontrolleinheit (16) im Sinne einer zeitoptimierten Durchführung des Ladevorgangs vorgenommen wird.

6. Lademanagementverfahren nach wenigstens einem der vorhergehenden Ansprüche, **dadurch gekennzeichnet, dass** die für den zu erwartenden Energieverbrauch spezifischen Parameter der Kontrolleinheit (16) von einer Eingabeeinrichtung (34), die der bedienerseitigen Planung des auszuführenden landwirtschaftlichen Arbeitseinsatzes dient, zur Verfügung gestellt werden.

7. Lademanagementverfahren nach wenigstens einem der vorhergehenden Ansprüche, **dadurch gekennzeichnet, dass** die Wahl der wenigstens einen Ladestation (54) von der Kontrolleinheit (16) mit dem Ziel erfolgt, dass der sich aus der Zeitspanne der applikationsbedingten Fahrtunterbrechung ergebende Ladezustand des elektrischen Energiespeichers (40) ausreicht, um insbesondere für den Fall einer nochmaligen applikationsbedingten Fahrtunterbrechung den Ort einer weiteren Ladestation zu erreichen, oder aber, um den landwirtschaftlichen Arbeitseinsatz vollständig abzuschließen.
